(19) Europäisches Patentamt
European Patent Office
Office européen des brevets

(11) **EP 2 278 262 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **10006615.8**

(22) Anmeldetag: **25.06.2010**

(51) Int Cl.:
*G01B 5/20* (2006.01)     *G01B 5/00* (2006.01)

(54) **Verfahren zur Ermittlung der Form eines Kurbelzapfens einer Kurbelwelle**

Method for determining the shape of a crank pin of a crankshaft

Procédé de détermination de la forme d'un tourillon d'un vilebrequin

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **08.07.2009 DE 102009032353**

(43) Veröffentlichungstag der Anmeldung:
**26.01.2011 Patentblatt 2011/04**

(73) Patentinhaber: **JENOPTIK Industrial Metrology Germany GmbH**
**78056 Villingen-Schwenningen (DE)**

(72) Erfinder: **Wegmann, Heinz**
**Mettmenstetten 8932 (CH)**

(74) Vertreter: **Wagner, Carsten et al**
**Patentanwaltskanzlei**
**Am Buchenhof 3**
**31303 Burgdorf (DE)**

(56) Entgegenhaltungen:
**EP-B1- 1 263 547        US-A- 5 077 908**
**US-A1- 2004 055 170    US-B1- 6 415 200**

EP 2 278 262 B1

## Beschreibung

Die Erfindung betrifft ein Verfahren zur Ermittlung der Form eines Kurbelzapfens einer Kurbelwelle. Bei der Bearbeitung von Kurbelzapfen von Kurbelwellen auf einer Schleifmaschine ist es erforderlich, während des Bearbeitungsvorganges fortlaufend zu messen, ob ein gewünschtes Maß erreicht ist und der Bearbeitungsvorgang damit beendet werden kann oder ob der Bearbeitungsvorgang zur Erreichung des gewünschten Maßes fortzusetzen ist. Hierbei wird im Rahmen eines Inprozeß-Meßverfahrens beispielsweise ein Meßprisma verwendet, dessen Schenkel bzw. Schneiden über eine geeignete Mechanik in Kontakt mit dem zu vermessenden Kurbelzapfen gehalten werden. Über einen an dem Meßprisma angeordneten linear auslenkbaren Meßtaster werden Meßwerte aufgenommen, die die Form des Kurbelzapfens repräsentieren. Das Aufnehmen der Meßwerte erfolgt bei dem bekannten Verfahren, während der Kurbelzapfen eine Orbitaldrehung um eine Drehachse ausführt, die zu der Zapfenachse und der Drehachse einer verwendeten Schleifscheibe parallel ist. Aufgrund der Orbitaldrehung des Kurbelzapfens, während derer das Meßprisma mitsamt dem Meßtaster in Eingriff mit dem Kurbelzapfen gehalten ist, führt das Meßprisma und damit der Meßtaster eine Drehbewegung relativ zu dem Kurbelzapfen aus. Wird während einer vollständigen Drehung des Kurbelzapfens um 360° eine bestimmte Anzahl von Meßwerten aufgenommen, so sind diese Meßwerte aufgrund der Relativbewegung des Kurbelzapfens zu dem Meßtaster nicht äquidistanten Punkten entlang des Umfanges des Kurbelzapfens zugeordnet.

Um eine hierdurch verursachte Verfälschung der anhand der Meßwerte ermittelten Form des Werkstückes zu vermeiden, ist es erforderlich, die relative Drehbewegung des Meßtasters relativ zu dem Kurbelzapfen bei der Auswertung zu berücksichtigen.

Hinsichtlich der Erfindung sind Verfahren der betreffenden Art, beispielsweise aus US 2004/0055170 A1 sowie aus US 6 415 200 B1 entnehmbar. In US 2004/0055170 A1 ist eine Methode beschrieben, bei der ein Meßfühler zur Messung von Artefakten verwendet wird, wobei die während der Bewegung des Meßfühlers zum und vom Artefakt auftretende Fehler, die durch zeitliche Verzögerungen bedingt sind, korrigiert werden können.Darüber hinaus ist in US 6 415 200 B1 eine Vorrichtung und ein Verfahren offenbart zur Verbesserung der Abmessungsgenauigkeit bearbeiteter Werkstücke mittels rückgekoppelt kompensierter Bearbeitungsbedingungen.

Durch EP 1 263 547 B1 ist ein Verfahren zur Ermittlung der Form eines Werkstücks bekannt, bei dem in der zuvor erwähnten Art und Weise mittels eines Meßtasters die Form des Werkstückes repräsentierende Meßwerte aufgenommen und gespeichert werden, wobei bei dem in der EP 1 263 547 B1 beschriebenen Verfahren das Werkstück ein Kurbelzapfen einer Kurbelwelle ist. Bei dem bekannten Verfahren wird die Relativdrehung des Meßtasters zu dem Kurbelzapfen erfaßt, und die mittels des Meßtasters aufgenommenen Meßwerte werden zur Kompensation der Relativdrehung vorverarbeitet. Um aus den mittels der Meßanordnung, die aus dem Meßprisma und dem Meßtaster besteht, erfaßten Meßwerten die Form des Werkstücks zu errechnen, ist es aus der EP 1 263 547 B1 wie auch aus der US 5 077 908 und der EP 0 068 082 A2 sowie der Druckschrift "Automatisierte Dreipunktmessung zur Rundheitsbestimmung an Kolbenbolzen", Studienarbeit Jörg Seewig, Universität Hannover, Fachbereich Elektrotechnik, Dezember 1992, bekannt, die vorverarbeiteten Meßwerte einer Fourieranalyse (harmonischen Analyse) zu unterziehen.

Der Erfindung liegt die Aufgabe zugrunde, ein zu dem vorbeschriebenen Verfahren alternatives Verfahren zur Ermittlung der Form eines Werkstücks anzugeben.

Diese Aufgabe wird durch die im Anspruch 1 angegebene Erfindung gelöst. Vorteilhafte Weiterbildungen ergeben sich aus den abhängigen Ansprüchen. Bezogen auf die Ermittlung der Form eines Kurbelzapfens einer Kurbelwelle, mittels einer Meßanordnung, die aus einem Meßprisma und einem Meßtaster besteht, löst sich die Erfindung von dem Gedanken, die Form des Werkstücks aus den Meßwerten unter Verwendung einer Fourieranalyse (harmonischen Analyse) zu ermitteln. Ihr liegt vielmehr der Gedanke zugrunde, die Form des Werkstückes aus den Meßwerten mithilfe eines Iterationsverfahrens zu ermitteln.

Erfindungsgemäß wird unter der Ermittlung der Form eines Werkstückes auch die Ermittlung von Formabweichungen verstanden. Bezogen auf einen Kurbelzapfen einer Kurbelwelle kann das erfindungsgemäße Verfahren somit beispielsweise zur Messung bzw. Ermittlung einer Rundheitsabweichung des Kurbelzapfens und/oder seines Durchmessers herangezogen werden.

Soll mittels des erfindungsgemäßen Verfahrens beispielsweise die Form eines Kurbelzapfens einer Kurbelwelle während eines Schleifvorganges, also in einem Inprozeß-Meßverfahren, ermittelt werden, so werden zunächst mittels eines Meßtasters die Form des Werkstükkes repräsentierende Meßwerte in Abhängigkeit von der Winkellage des Kurbelzapfens erfaßt. Hierbei wird erfindungsgemäß wenigstens ein Meßtaster verwendet. Es ist erfindungsgemäß jedoch auch möglich, mehr als einen Meßtaster zu verwenden.

Daran anschließend werden im Rahmen eines erfindungsgemäßen Iterationsverfahrens die Form des Werkstücks repräsentierende Annäherungswerte festgesetzt. Aus den Annäherungswerten werden daran anschließend modellierte Meßwerte unter Berücksichtigung der Geometrie der Meßanordnung, insbesondere des Meßprismas und seiner Winkellage, berechnet. Die mittels des Meßtasters erfaßten Meßwerte werden daran anschließend mit den modellierten Meßwerten verglichen und Differenzwerte berechnet. Aus den Differenzwerten werden daran anschließend zur optimierten Annäherung neue Annäherungswerte berechnet.

Die zuvor beschriebenen Schritte werden solange iteriert, bis eine Abbruchbedingung erreicht ist. Beispielsweise und insbesondere kann die Abbruchbedingung eine vorgegebene maximale Differenz zwischen insbesondere der Standardabweichung der Differenzwerte und einem Grenzwert sein.

Die beim Erreichen der Abbruchbedingung geltenden Annäherungswerte werden im Rahmen des erfindungsgemäßen Verfahrens abschließend als Form des Werkstücks gespeichert, bei einem Kurbelzapfen mit idealerweise kreisförmigem Querschnitt vorzugsweise in Polarkoordinaten.

Das erfindungsgemäße Verfahren ermöglicht somit die iterative Ermittlung der Form des Werkstücks anhand der mittels eines Meßtasters erfaßten Meßwerte, wobei weder eine Vorverarbeitung der Meßwerte zur Korrektur einer Relativdrehung des Meßtasters zu dem Werkstück noch eine Fourieranalyse erforderlich ist.

Ein besonderer Vorteil des erfindungsgemäßen Verfahrens besteht darin, daß es zeitschnell ausführbar ist und sich die Form des Werkstücks mit hoher Genauigkeit und Reproduzierbarkeit ermitteln läßt. Die Genauigkeit ist in Abhängigkeit von dem jeweiligen Anwendungsfall durch entsprechende Wahl der Abbruchbedingung innerhalb weiter Grenzen wählbar.

Grundsätzlich kann das erfindungsgemäße Verfahren zur Messung der Form von Werkstücken außerhalb eines Bearbeitungsvorganges verwendet werden. Besonders gut ist das erfindungsgemäße Verfahren jedoch als Inprozeß-Meßverfahren geeignet. Hierzu sieht eine vorteilhafte Weiterbildung der Erfindung vor, daß die Form des Werkstücks während eines Bearbeitungsvorganges, insbesondere eines Schleifvorganges, ermittelt wird.

Unter einem Meßprisma wird erfindungsgemäß eine Vorrichtung verstanden, die an zwei Stellen entlang des Umfanges eines Zapfens anliegt, wobei der Meßtaster den Zapfen entfernt von den Stellen, an denen das Meßprisma an dem Zapfen anliegt, kontaktiert. Insbesondere kann das Meßprisma im Querschnitt V-förmig oder wenigstens abschnittsweise V-förmig ausgebildet sein.

Bei Verwendung eines Meßprismas wird vorteilhafterweise ein linear auslenkbarer Meßtaster verwendet, wie dies eine andere Weiterbildung der Erfindung vorsieht. Erfindungsgemäß ist die Verwendung eines einzigen Meßtasters ausreichend. Erfindungsgemäß können jedoch auch zwei oder mehrere Meßtaster verwendet werden.

Um das erfindungsgemäße Verfahren besonders einfach durchführbar und zugleich besonders präzise zu gestalten, sieht eine andere vorteilhafte Weiterbildung vor, daß Schritt d) folgende Teilschritte umfaßt:

 d1) Berechnung von Korrekturwerten aus den Differenzwerten,
 d2) Korrektur der Annäherungswerte anhand der Korrekturwerte.

Bei der vorgenannten Ausführungsform kann die Korrektur der Annäherungswerte anhand der Korrekturwerte in beliebiger geeigneter Weise vorgenommen werden. Um die auszuführenden Rechenoperationen besonders einfach und zeitschnell zu gestalten, sieht insoweit eine vorteilhafte Weiterbildung vor, daß in Schritt d2) die Korrekturwerte zu den Annäherungswerten addiert werden.

Um die Konvergenz des erfindungsgemäßen Verfahrens zu verbessern bzw. sicherzustellen, sieht eine andere Weiterbildung der Erfindung vor, daß bei der Addition der Korrekturwerte zu den Annäherungswerten ein Dämpfungsfaktor berücksichtigt wird.

Erfindungsgemäß kann die Abbruchbedingung in Abhängigkeit von dem jeweiligen Anwendungsfall und insbesondere von der gewünschten Genauigkeit innerhalb weiter Grenzen gewählt werden. Eine vorteilhafte Weiterbildung der Erfindung sieht insoweit vor, daß in Schritt f) als Abbruchbedingung ein Grenzwert für wenigstens einen Differenzwert herangezogen wird. Um zu verhindern, daß bei einer ungünstigen Konstellation der Meßwerte das erfindungsgemäße Verfahren abgebrochen wird, bevor eine gewünschte Genauigkeit erreicht ist, sieht eine vorteilhafte Weiterbildung der vorgenannten Ausführungsform vor, daß die Standardabweichung der Differenzwerte mit einem Grenzwert verglichen wird.

Die Erfindung wird nachfolgend anhand der beigefügten Zeichnung an einem Ausführungsbeispiel näher erläutert.

Es zeigt:

Fig. 1 eine schematische Seitenansicht einer Meßanordnung zur Durchführung eines Ausführungsbeispieles eines erfindungsgemäßen Meßverfahrens,

Fig. 2 ein Übersichtsdiagramm zur Verdeutlichung des grundsätzlichen Ablaufs des erfindungsgemäßen Verfahrens, und

Fig. 3 eine vergrößerte Darstellung der Meßanordnung, bestehend aus einem Meßprisma und einem Meßtaster, in Kombination mit dem zu bearbeitenden Werkstück.

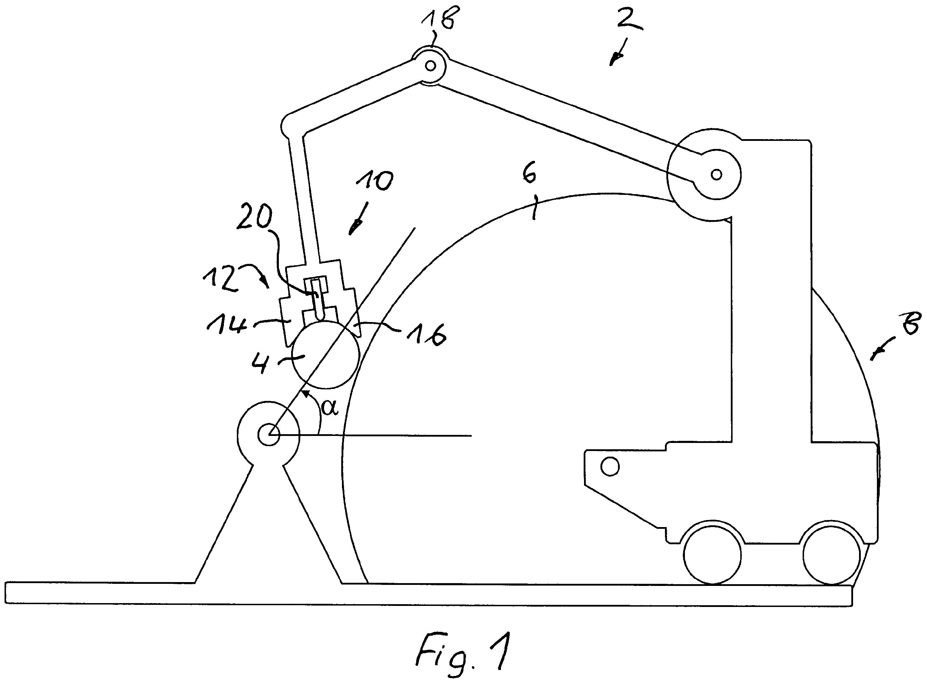

In Fig. 1 ist stark schematisiert und lediglich beispielhalber ein Ausführungsbeispiel einer Vorrichtung 2 zur Durchführung eines Ausführungsbeispieles eines erfindungsgemäßen Verfahrens dargestellt. Die Vorrichtung 2 dient zur Inprozeß-Messung der Form bzw. des Profiles eines Kurbelzapfens 4 während der Bearbeitung mittels einer Schleifscheibe 6 einer in Fig. 1 lediglich schematisch angedeuteten Schleifmaschine 8. Die Vorrichtung 2 weist eine Meßanordnung 10 auf, die bei diesem Ausführungsbeispiel ein Meßprisma 12 aufweist. Das Meßprisma 12 weist zwei Schenkel 14, 16 auf, die sich während des Meßvorganges in Eingriff mit dem Kurbelzapfen 4 befinden, während dieser eine Orbitaldrehung ausführt. Um das Meßprisma 12 während der Orbitaldrehung des Kurbelzapfens 4 mit demselben in Eingriff zu halten, weist die Vorrichtung 2 ein in Fig. 1 lediglich schematisch angedeutetes Gestänge 18 auf. Die Meßanordnung 10 weist ferner einen Meßtaster 20 auf, bei dem es sich bei diesem Ausführungsbeispiel um einen linear auslenkbaren Meßtaster handelt.

Die Art und Weise, wie mittels der Meßanordnung 10 während der Bearbeitung des Kurbelzapfens 4 Meßwerte aufgenommen werden, ist dem Fachmann allgemein bekannt, beispielsweise durch WO-A-9712724 und EP-A-1 263 547, und wird daher hier nicht näher erläutert.

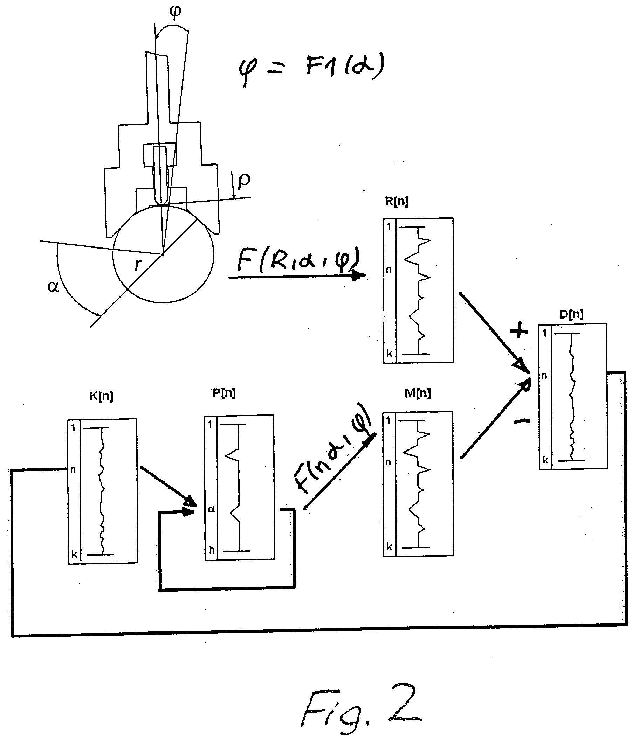

Fig. 2 verdeutlicht schematisch vereinfacht den Ablauf eines Ausführungsbeispiels des erfindungsgemäßen Verfahrens.

Bei der Messung bzw. Ermittlung des Profils eines Werkstücks, das bei diesem Ausführungsbeispiel durch einen Kurbelzapfen einer Kurbelwelle gebildet ist, wird in der jeweiligen Winkelposition $\alpha$ mittels des Meßprismas ein Array R[n] erzeugt. Die Verteilung der Punkte mit Index n in dem Array wird durch die relative Schwenkbewegung $\varphi$ des Meßprismas gegenüber dem Ursprung des Winkels $\alpha$ verzerrt. Diese Verzerrung ist durch die Mechanik der Meßvorrichtung gegeben und kann als Funktion des Winkels $\alpha$ beschrieben werden. Die Zuordnung zwischen dem Winkel $\alpha$ und dem Index n wird somit durch die Funktion F berücksichtigt.

Aus einem Array P[a] wird mathematisch ein Array M[n] errechnet. Dabei wird die gleiche Übertragungsfunktion F angewandt wie bei der Aufnahme der Rohdaten R[n] durch die Messung. Durch fortlaufende Iteration wird das Array P[$\alpha$] verändert, bis die Abbildung im Array M[n] möglichst gleich dem Array R[n] ist. Dabei bildet das Array D[n] ein Differenzarray zwischen dem aktuellen Array M[n] und den Rohdaten in R[n].

Das Array K[n] wird über eine entsprechend den jeweiligen Anforderungen gewählte Korrekturstrategie aus dem Differenzarray K[n] erzeugt. Diese Abbildung wird so optimiert, daß einerseits eine schnelle Konvergenz und andererseits ein stabiles Verhalten des geschlossenen Regelkreises erreicht wird. In jedem Iterationsschritt werden die Korrekturdaten K[n] zu dem Array P[$\alpha$] addiert. Nach ausreichend vielen Iterationsschritten stimmt das Array P[a] mit den Polarkoordinaten des Werkstücks in hinreichendem Maße überein, um die Form bzw. das Profil des Werkstücks beurteilen zu können.

Nachfolgend wird ein Ausführungsbeispiel des erfindungsgemäßen Verfahrens näher erläutert, wobei folgende Nomenklatur verwendet wird:

| | |
|---|---|
| $\beta$ | Scheitelwinkel des Prismas |
| $\gamma_1, \gamma_2$ | Winkel der Berührungspunkte an den Prismaschenkeln in Bezug auf den Ort der Meßwertabtastung durch den Meßgeber |
| $\alpha$ | Winkelposition des Werkstücks |
| $R_{(\alpha)}$ | Polarkoordinaten des gemessenen Werkstücks |
| $\rho$ | Tasterauslenkung des Meßgebers im Prismascheitel |
| $\varphi$ | Winkellage des Prismas |
| $\rho'_{(\alpha)}$ | Meßwertverlauf ("Tasterrohwerte") des Meßtasters im Prismascheitel während einer Umdrehung |
| $\varphi_{(\alpha)}$ | Verlauf der Winkellage des Prismas während einer Werkstückumdrehung, z. B. $\pm$ 10° |
| $r_{(\alpha)}$ | Annäherungswerte für Polarkoordinaten der gemessenen Werkstückform |
| $\rho_{(\alpha)}$ | Modellberechnung für Meßwertverlauf |
| $\delta_{(\alpha)}$ | Differenzwerte zwischen $\rho_{(\alpha)}$ und $\rho'_{(\alpha)}$ |
| $\varepsilon_{(\alpha)}$ | Korrekturwerte |
| $k_1$ | Dämpfungskoeffizient |

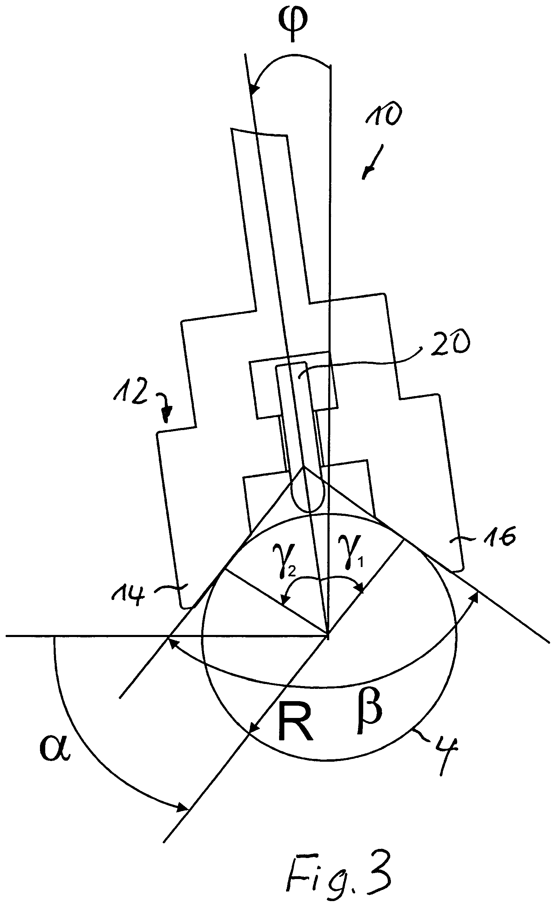

Fig. 3 zeigt eine vergrößerte Darstellung der Meßanordnung 10 in Kombination mit dem Kurbelzapfen 4, wobei zur Verdeutlichung einige der oben in Bezug genommenen Größen in die Figur eingetragen sind.

Im einzelnen vollzieht sich das in Bezug genommene Ausführungsbeispiel des erfindungsgemäßen Verfahrens bei der Messung der Form bzw. des Profiles eines Kurbelzapfens wie folgt:

In Schritt a) des erfindungsgemäßen Verfahrens werden während einer Umdrehung oder während mehreren Umdrehungen des Kurbelzapfens der Verlauf von Meßwerten des Meßtasters im Prismascheitel (Meßtasterrohwerte $\rho_{(\alpha)}$) und der Verlauf der Winkellage $\varphi_{(\alpha)}$ erfaßt. Alternativ kann die Winkellage $\varphi_{(\alpha)}$ auch mit geometrischen Mitteln aus der Geometrie der Meßanordnung berechnet werden.

In Schritt b) des erfindungsgemäßen Verfahrens werden die Form des Werkstücks repräsentierende Annäherungswerte in Polarkoordinaten festgesetzt, beispielsweise durch Vorgabe einer Kreisform:

$$r_{(\alpha)} = 0$$

Daran anschließend werden in Schritt c) des erfindungsgemäßen Verfahrens anhand der Annäherungswerte modellierte Meßwerte berechnet. Dabei können entsprechend den jeweiligen Anforderungen unterschiedlich komplexe Modelle verwendet werden. In dem vorliegenden Ausführungsbeispiel wird ein Modell mit einer Dreipunktberührung der Meßanordnung mit dem Kurbelzapfen unter den Winkeln $\gamma_1$ und $\gamma_2$ verwendet:

$$\rho'_{(\alpha)} = r_{(\alpha + \varphi_{(\alpha)})} - \frac{1}{2 \cdot \sin(\frac{\pi}{2} - \gamma_1)} \cdot r_{(\alpha + \varphi_{(\alpha)} - \gamma_1)} - \frac{1}{2 \cdot \sin(\frac{\pi}{2} - \gamma_2)} \cdot r_{(\alpha + \varphi_{(\alpha)} + \gamma_2)}$$

Daran anschließend werden in Schritt b) die mittels des Meßtasters erfaßten Meßwerte mit den modellierten Meßwerten verglichen und Differenzwerte berechnet:

$$\delta_{(\alpha)} = \rho_{(\alpha)} - \rho'_{(\alpha)}$$

Bei dem dargestellten Ausführungsbeispiel umfaßt der Schritt d) einen Teilschritt d1), bei dem aus den Differenzwerten Korrekturwerte berechnet werden, und einen Teilschritt d2) bei dem die Annäherungswerte anhand der Korrekturwerte korrigiert werden. Bei der Berechnung von Korrekturwerten aus den Differenzwerten können beispielsweise für jede Winkellage die Differenzwerte an drei Punkten zur Berechnung herangezogen werden gemäß folgender Formel:

$$\epsilon_{(\alpha)} = \delta_{(\alpha + \varphi_{(\alpha)})} - \frac{1}{2 \cdot \sin(\frac{\pi}{2} - \gamma_1)} \cdot \delta_{(\alpha + \varphi_{(\alpha)} - \gamma_1)} - \frac{1}{2 \cdot \sin(\frac{\pi}{2} - \gamma_2)} \cdot \delta_{(\alpha + \varphi_{(\alpha)} + \gamma_2)}$$

Bei dem dargestellten Ausführungsbeispiel werden die Annäherungswerte anhand der Korrekturwerte dadurch korrigiert, daß die Korrekturwerte zu den jeweils bestehenden Annäherungswerten addiert werden, wobei gemäß der folgenden Formel ein Dämpfungsfaktor berücksichtigt wird, um neue Annäherungswerte zu erhalten:

$$r'_{(\alpha)} = r_{(\alpha)} + \frac{1}{k_1} \cdot \epsilon_{(\alpha)}$$

Die zuvor beschriebenen Schritte c) bis e) werden bis zum Erreichen einer Abbruchbedingung erfindungsgemäß iteriert. Hierbei wird die Abbruchbedingung beispielsweise durch einen Vergleich der Standardabweichung der Differenzwerte mit einem Grenzwert definiert. Ist die gewünschte Genauigkeit noch nicht erreicht, so bilden die in Schritt e) gefundenen neuen Annäherungswerte die Grundlage für eine erneute Iteration beginnend mit Schritt c) des erfindungsgemäßen Verfahrens.

Ist die gewünschte Genauigkeit erreicht, so bilden die in Schritt e) gefundenen neuen Annäherungswerte die gesuchten Polarkoordinaten für die Form des Werkstücks:

$$R_{(\alpha)} \approx r'_{(\alpha)}$$

Das erfindungsgemäße Verfahren ermöglicht eine schnelle und genaue Ermittlung der Form bzw. des Profiles eines Werkstücks unter Heranziehung von mittels eines Meßtasters erfaßten Meßwerten.

Ist die gewünschte Genauigkeit erreicht, so bilden die in Schritt e) gefundenen neuen Annäherungswerte die gesuchten Polarkoordinaten für die Form des Werkstücks:

$$R_{(\alpha)} \approx r'_{(\alpha)}$$

Das erfindungsgemäße Verfahren ermöglicht eine schnelle und genaue Ermittlung der Form bzw. des Profiles eines Werkstücks unter Heranziehung von mittels eines Meßtasters erfaßten Meßwerten.

**Patentansprüche**

1. Verfahren zur Ermittlung der Form eines Kurbelzapfens einer Kurbelwelle, wobei der Kurbelzapfen während des Meßvorganges eine Orbitaldrehung um eine Drehachse ausführt, die zu der Zapfenachse parallel ist, wobei eine Meßanordnung verwendet wird, die ein Meßprisma aufweist, an dem ein Meßtaster angeordnet ist, wobei das Meßprisma an zwei Stellen entlang des Umfangs des Kurbelzapfens anliegt, und wobei der Meßtaster den Kurbelzapfen entfernt von den Stellen, an denen das Meßprisma an dem Zapfen anliegt, kontaktiert, mit folgenden Schritten:

   a) von dem Meßtaster werden die Form des Kurbelzapfens repräsentierende Meßtasterrohwerte in Abhängigkeit von der Winkellage des Kurbelzapfens erfaßt und gespeichert,
   b) es werden die Form des Kurbelzapfens repräsentierende Annäherungswerte festgesetzt,
   c) anhand der Annäherungswerte werden unter Berücksichtigung der Geometrie der Meßanordnung modellierte Meßwerte des Meßtasters berechnet,
   d) die mittels des Meßtasters erfaßten Meßtasterrohwerte werden mit den modellierten Meßwerten des Meßtasters verglichen und Differenzwerte berechnet,
   e) aus den Differenzwerten werden zur optimierten Annäherung an die Form des Kurbelzapfens neue Annäherungswerte berechnet,
   f) die Schritte c) bis e) werden bis zum Erreichen einer Abbruchbedingung iteriert,
   g) die beim Erreichen der Abbruchbedingung geltenden Annäherungswerte werden als Form des Kurbelzapfens gespeichert.

2. Verfahren nach Anspruch 1, **dadurch gekennzeichnet, daß** die Form des Kurbelzapfens während eines Bearbeitungsvorganges, insbesondere eines Schleifvorganges, ermittelt wird.

3. Verfahren nach einem der vorhergehenden Ansprüche, **dadurch gekennzeichnet, daß** ein linear auslenkbarer Meßtaster verwendet wird.

4. Verfahren nach einem der vorhergehenden Ansprüche, **dadurch gekennzeichnet, daß** Schritt d) folgende Teilschritte umfaßt:

   d1) Berechnung von Korrekturwerten aus den Differenzwerten,
   d2) Korrektur der Annäherungswerte anhand der Korrekturwerte.

5. Verfahren nach Anspruch 4, **dadurch gekennzeichnet, daß** in Schritt d2) die Korrekturwerte zu den Annäherungswerten addiert werden.

6. Verfahren nach Anspruch 5, **dadurch gekennzeichnet, daß** bei der Addition der Korrekturwerte zu den Annäherungswerten ein Dämpfungsfaktor berücksichtigt wird.

7. Verfahren nach einem der vorhergehenden Ansprüche, **dadurch gekennzeichnet, daß** in Schritt f) als Abbruchbedingung ein Grenzwert für wenigstens einen Differenzwert herangezogen wird.

8. Verfahren nach Anspruch 7, **dadurch gekennzeichnet, daß** die Standardabweichung der Differenzwerte mit einem Grenzwert verglichen wird.

**Claims**

1. Method for determining the shape of a crankpin of a crankshaft, wherein during the measuring process the crankpin performs an orbital rotation about a rotational axis which is parallel to the pin axis, wherein a measuring arrangement is used which comprises a measuring prism, on which a measuring sensor is arranged, wherein the measuring prism bears on two points around the circumference of the crankpin, and wherein the measuring sensor contacts the crankpin at a distance from the points at which the measuring prism bears on the pin,

comprising the following steps:

a) measuring sensor raw values representing the shape of the crankpin are determined and stored by the measuring sensor as a function of the angular position of the crankpin,

b) approximate values representing the shape of the crankpin are determined,

c) modelled measurement values of the measuring sensor are calculated using the approximate values, taking into consideration the geometry of the measuring arrangement,

d) the measuring sensor raw values determined by means of the measuring sensor are compared with the modelled measurement values of the measuring sensor and difference values are calculated,

e) new approximate values are calculated from the difference values for optimised approximation to the shape of the crankpin,

f) steps c) to e) are iterated until a termination condition is met,

g) the approximate values in effect when the terminating condition is met are stored as the shape of the crankpin.

2. Method according to claim 1, **characterised in that** the shape of the crankpin is determined during a machining process, in particular a grinding process.

3. Method according to any of the preceding claims, **characterised in that** a linearly movable measuring sensor is used.

4. Method according to any of the preceding claims, **characterised in that** step d) includes the following substeps:

d1) calculation of correction values from the difference values,

d2) correction of the approximate values using the correction values.

5. Method according to claim 4, **characterised in that** the correction values are added to the approximate values in step d2).

6. Method according to claim 5, **characterised in that** a damping factor is taken into account when the correction values are added to the approximate values.

7. Method according to any of the preceding claims, **characterised in that** a limit value for at least one difference value is used as a termination condition in step f).

8. Method according to claim 7, **characterised in that** the standard deviation of the difference values is compared with a limit value.

## Revendications

1. Procédé pour la détermination de la forme d'un maneton d'un vilebrequin, le maneton effectuant, pendant le processus de mesure, une rotation orbitale autour d'un axe de rotation, qui est parallèle à l'axe du maneton, un dispositif de mesure comprenant un prisme de mesure, sur lequel est disposé un palpeur de mesure, étant utilisé, le prisme de mesure s'appuyant à deux endroits le long de la circonférence du maneton, et le palpeur de mesure entrant en contact avec le maneton loin des endroits au niveau desquels le prisme de mesure s'appuie contre le maneton, avec les étapes suivantes :

a) le palpeur de mesure détecte et mémorise les valeurs brutes du palpeur de mesure représentant la forme du maneton en fonction de la position angulaire du maneton,

b) les valeurs approximatives représentant la forme du maneton sont déterminées,

c) à l'aide des valeurs approximatives, en tenant compte de la géométrie du dispositif de mesure, des valeurs de mesure modélisées du palpeur de mesure sont calculées,

d) les valeurs brutes détectées au moyen du palpeur de mesure sont comparées avec les valeurs de mesure modélisées du palpeur de mesure et des valeurs différentielles sont calculées,

e) à partir des valeurs différentielles, pour une approximation optimisée de la forme du maneton, de nouvelles valeurs approximatives sont calculées,

f) les étapes c) à e) sont itérées jusqu'à atteindre une condition d'interruption,

g) les valeurs approximatives valables lorsque la condition d'interruption est atteinte sont mémorisées comme la forme du maneton.

**2.** Procédé selon la revendication 1, **caractérisé en ce que** la forme du maneton est déterminée pendant un processus d'usinage, plus particulièrement un processus de meulage.

**3.** Procédé selon l'une des revendications précédentes, **caractérisé en ce qu'**un palpeur de mesure orientable de manière linéaire est utilisé.

**4.** Procédé selon l'une des revendications précédentes, **caractérisé en ce que** l'étape d) comprend les étapes partielles suivantes :

d1) calcul de valeurs de correction à partir des valeurs différentielles,
d2) correction des valeurs approximatives à l'aide des valeurs de correction.

**5.** Procédé selon la revendication 4, **caractérisé en ce que**, dans l'étape d2), les valeurs de correction sont ajoutées aux valeurs approximatives.

**6.** Procédé selon la revendication 5, **caractérisé en ce que**, lors de l'addition des valeurs de correction aux valeurs approximatives, un facteur d'amortissement est pris en compte.

**7.** Procédé selon l'une des revendications précédentes, **caractérisé en ce que**, dans l'étape f), en tant que condition d'interruption, une valeur limite pour au moins une valeur différentielle est utilisée.

**8.** Procédé selon la revendication 7, **caractérisé en ce que** l'écart standard des valeurs différentielles est comparé avec une valeur limite.

Fig. 1

EP 2 278 262 B1

$$\varphi = F1(\alpha)$$

Fig. 2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040055170 A1
- US 6415200 B1
- EP 1263547 B1
- US 5077908 A
- EP 0068082 A2
- WO 9712724 A
- EP 1263547 A

**In der Beschreibung aufgeführte Nicht-Patentliteratur**

- Automatisierte Dreipunktmessung zur Rundheitsbestimmung an Kolbenbolzen. Studienarbeit Jörg Seewig. Universität Hannover, Fachbereich Elektrotechnik, Dezember 1992